# EUROPEAN PATENT SPECIFICATION

(11) **EP 1 396 389 B1**
(45) Date of publication and mention of the grant of the patent: **14.06.2006**
(21) Application number: 02425554.9
(22) Date of filing: 09.09.2002
(51) Int. Cl.: B60R 16/02

(54) **Electric power distribution system to a number of loads, particularly for motorvehicles**
Energieverteilungssystem für Lasten in Kraftfahrzeugen
Système de distribution de puissance électrique pour un nombre de charges dans des véhicules

(43) Date of publication of application: 10.03.2004
(73) Proprietor: Eurolites S.p.A., 12078 Ormea (CN) (IT)
(72) Inventor: Fiorucci, Elio Massimo, 18038 Sanremo (IM) (IT)
(74) Representative: Spandonari, Carlo

(56) References cited:
- GB-A- 2 041 592
- US-A- 3 651 454
- US-A- 4 538 262
- US-A- 5 469 150

## Description

### DISCLOSURE

This invention is concerned with an electric power distribution system to a number of loads, particularly though not exclusively for application to motor vehicles.

A system according to the preamble of claim 1 is generally known in the prior art, ref. e.g. US 5,469,150.

Today, the different electric onboard a vehicle, such as headlights, tail lamps, turn indicators, fog lights, clearance indicators and others, are powered from the vehicle battery through respective power cables radiating from a main board which also accommodates most of the actuating controls for the loads (switches, relays, etc.). In the case of lorry semitrailers and trailers generally, power for the individual loads is supplied to the trailer via a multipole connector having one pole for each load (beside a common earth pole).

The above distribution system entails a considerable redundance in the power cables, with superfluous costs, due not only to the excessive cable material, but also due to installation and bulk, since a cable must be laid for each load over the entire path from a main board to the load. The redundancy increases with the number of loads, which today has considerably grown, particularly on industrial vehicles. The waste of materials is further enhanced because it is a common practice, for simplicity of manufacture, to lay power cables also for optional loads that are not normally installed in the standard vehicle.

Moreover, as it often is the case, if new loads, not provided for by the manufacturer of the vehicle, are to be installed in the known distribution system (such as burglar alarms, special systems, etc.), particularly on vehicles modified for special purposes, new cables have to be laid, often with attendant difficulties in finding room and accommodation passages for the new cable, and with non-negligible work times.

Further, if monitoring of the loads is required on prior motor vehicles, say in order to be advised of any lamp burn-outs, these functions generally have to be provided separately from the main power distribution system.

A main object of the invention is therefore to provide an electric power distribution system to the loads in a vehicle, which has a smaller weight and bulk than prior systems.

Another object is to provide a distribution system as above, which has lesser overall manufacturing and managing costs than prior systems.

Another object is to provide an electric power distribution system having a high degree of flexibility in installation of the loads, even if not provided for by the manufacturer and installed subsequently, without a need to lay new supply leads, so that it is not necessary to foresee, during design and assembly of the system, which controls shall be implemented.

Another object is to provide the above system so that it inherently includes load monitoring functions.

Another object is to provide an electric power distribution system where the location and diagnosis of malfunctions is easier.

The invention achieves the above and other objects and advantages, such as will appear from the following disclosure, with an electric power distribution system to a number of loads, having the features recited in claim 1. The dependent claims point out other advantageous, though non essential, features of the invention.

The invention is described below in more detail, with reference to a preferred embodiment, shown by way of nonlimiting example in the attached drawings, wherein:
Figure 1 is a schematic representation of an electric power distribution system to the loads in a lorry semitrailer, according to the preferred embodiment of the invention;
Figure 2 is a block diagram of a connector and a control board used in the preferred embodiment of the invention;
Figure 3 is a waveshape diagram useful in understanding the operation of the invention;
Figure 4 is another waveshape diagram useful in understanding the operation of the invention;
Figure 5 is a block diagram of a connection unit used in the preferred embodiment of the invention;
Figure 6 is a block diagram of a control unit used in the preferred embodiment of the invention;
Figure 7 is cross-sectional, perspective view of a four-lead bus with a connection/control unit according to the preferred embodiment of the invention.

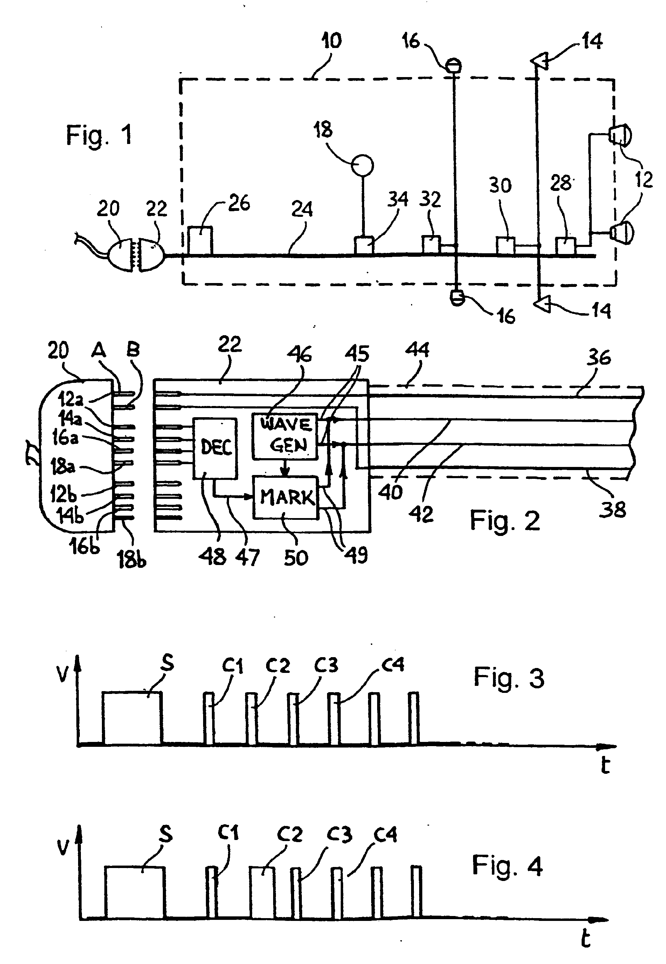

With reference to Figure 1, a semitrailer of a lorry shematically shown with 10, and built for coupling to a tractor (not shown) provided with a conventional electric system, is equipped with loads such as tail lamps 12, approaching-vehicle detectors 14, peripheral outline lights 16, rotating light 18, and others not shown for simplicity. Power to each of said loads is supplied from the tractor via a tractor connector 20, which couples with a corresponding trailer connector 22 terminating an electric, four-lead bus 24 according to the invention, which extendes over trailer 10, as futher described below. A main control unit 26 is coupled to four-lead bus 24 near trailer connector 20, as described below, as well as a number of connection units such as 28, 30, 32, 34, each leading to a respective load (or group of loads) 12, 14, 16, 18.

With reference to Figure 2, bus 24 comprises two power leads 36 and 38, and two signal leads 40, 42, all of which are enclosed in a flat insulating sheath 44, preferably for balanced signal transmission for noise protection.

With further reference to Figure 2, trailer connector 20 has a pair of pins A, B leading to the battery voltage, and also a number of pins 12a, 14a, 16a, 18a for the supply of respective loads, as well as further pins 12b, 14b, 16b, 18b for reception of possible ON/OFF monitoring signals from the same loads, as described below. Trailer connector 22 matches connector 20 and makes permanent connection of both power leads 36, 38 of the four-lead bus 24 to the battery voltage appearing on pins A, B.

Main control unit 26, which is preferably housed within the housing of trailer connector 22, comprises a waveshape generator 46, whose balanced output 45 is connected to signal leads 40, 42 of the four-lead electric bus 24. Waveshape generator 46 is designed to generate a sequence of frames each consisting of a waveshape substantially as shown on Figure 3, and comprising a relatively long sync pulse S, followed by a train of narrow signal pulses C1, C2, C3, C4, ..., in a number at least equal to the number of envisaged loads, but preferably in a vastly redundant number, e.g. 32 to 48 narrow pulses for the application described herein.

Main control unit 26 further comprises a decoder 48, which is coupled, through trailer connector 22, to pins 12a, 14a, 16a, 18a, and whose output 47 drives a pulse marker 50. The latter is also controlled by waveshape generator 46, and its balanced output is also connected to signal leads 40, 42 of four-lead electric bus 24. Decoder 48 establishes a predetermined correspondence between each of pins 12a, 14a, 16a, 18a and a predetermined serial number in the train of narrow pulses C1, C2, C3, C4, ..., and is programmed for enabling marker 50, in synchronism with waveshape generator 46, for applying to signal leads 40, 42 a lengthening voltage for each narrow pulse C1, C2, C3, C4, ... corresponding to a pin having high voltage. In other words, decoder 48 and marker 50 (synchronized with waveshape generator 46) together assign an order to pins 12a, 14a, 16a, 18a, check which pins are driven high by the tractor, and mark, i.e., lengthen any narrow pulses which correspond to high-driven pins, in the same order. It should be noted that each resulting lengthened pulse should be longer than non-lengthened pulses, but narrower than the sync pulse, so that the three kinds of pulses are clearly distinguished.

For instance, should pin 14a be high, while the remaining pins 12a, 16a, 18a are low, main control unit 26 will apply the waveshape shown on Figure 4 to signal leads 40, 42 of the four-lead bus.

The main control unit has been described on the basis of its functional blocks, but it will be understood that it could be implemented to a large extent by sequential logic, say by suitably programming a microprocessor in order to implement the required decoding and counting functions, etc. It lies within the ability of the average person skilled in the art to practically carry out the implementation of the above described functions, based on the specifications given above.

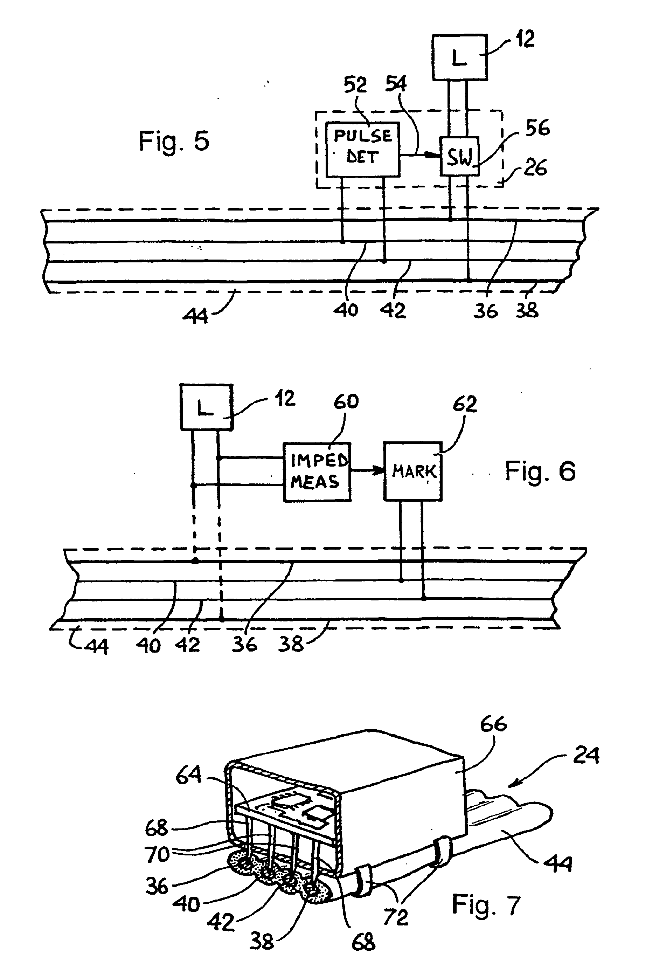

With reference to Figure 5, each of connection units 28, 30, 32, 34 of Figure 1 comprises a pulse parser 52, having a balanced input which can be coupled to signal 40, 42 in a desired point of the four-lead bus. The pulse parser is designed for recognizing sync pulse S traveling on the signal leads, for detecting, in the subsequent train of pulses, the pulse with the serial number assigned to its unit, and for determining whether the pulse is narrow or wide (or, in other words, whether that pulse is normal or marked, or if it is 0 or 1), and for emitting an enabling signal on its output 54 if the pulse happens to be marked. Each connection unit is permanently set with a unique serial number, distinct from the serial numbers of the remaining units.

With further reference to Figure 5, the connection unit further comprises a normally open switch device 56 from power leads 36, 38 to an associated load. Switch device 56 is driven by output 54 of pulse parser 52, which will enable it if it determines that its associated pulse is marked, i.e. lenghtened.

Beside connection units as described above, control or monitoring units can also be coupled to the bus. With reference to Figure 6, a load monitoring unit comprises a pulse marker 58, similar to marker 50 of Figure 2, which is driven by an impedance meter 60, connected to measure the impedance across the load and to mark an associated signaling pulse, distinct from the pulse used to drive the load. The signaling pulse will be parsed by another connection unit (not shown for simplicity), similar to the unit of figure 4 and used to apply a voltage to a load usually comprising one of monitoring pins such as 12b, 14b, 16b, 18b (Figure 2), leading to respective pilot lamps (not shown) or other similar indicators on board the tractor.

The above described monitoring unit may be used as a user-operated control unit, if, instead of the load, a button-operated contactor is installed, as will be evident to a person skilled in the art. This operation will be particularly advantageous in applications different from the application described herein, say if the invention is applied also to the main vehicle.

Pulse parser 52, switch device 56, marker 58 and impedance meter 60 should also be understood to be functional blocks which may be implemented, as in the case of main control unit 26, either as a hardware implementation or as a software implementation, by suitably programming a microprocessor. Again, the practical design of the functions described above lies within the ability of the average person skilled in the art, based on the specifications given above.

The connection unit comprising pulse parser 52 and switch device 56, and the control/monitoring unit comprising pulse marker 58 and impedance meter 60 may be separate and independent parts to be individually coupled to the bus depending on the required functions, but, as a rule, for simplicity and economy, both units are joined into a single unified part, where the functional portion which should happened not to be required is unused.

Figure 7 shows, in a perspective cross-sectional view, a piece of bus 24 with attached connection/monitoring unit, mounted on a plate 64 carrying circuits and components implementing the block diagrams described above with reference to Figures 5 and/or 6. Plate 64 is contained in a case or housing 66, from which two pairs of current-tapping needles 68, 70 extend to pierce the insulating sheath 30 and to penetrate the respective pairs of power leads 36, 38 and signal leads 40, 42, thereby establishing electric connections to the blocks in the unit, as described above. Case 64 is firmly buckled to the bus by means of clips or fasteners such as 72, or by other known means.

As it appears from the above disclosure, the general rule of the system is to assign a unique signal pulse to each of the loads for control purposes, and a further pulse to each load for monitoring purposes. However, it also lies within the scope of the system to assign a few of the frame pulses in common to a number of loads, for special purposes. For instance a pulse common to all loads might be marked in emergencies, and the connection unit for each load would, when it detects that its associated pulse is marked, check whether the emergency pulse is also marked, and select a different operating mode in each case.

Obviously, all the devices connecting to the bus (connection units, control units, monitoring units) are designed to enter a high-impedance state when inactive, in order to avoid conflicts among the components, as known in the art.

The narrow signal pulses C1, C2, C3, ... may have durations of the order of 20 µsec when unmarked, and triple durations, such as 60 µsec, when marked. This difference is easy to detect without uncertainties by means of cheap, readily available digital circuits. The width of sync pulse S is preferably about 8 to 10 times the duration of a narrow pulse, say 180 µsec. The overall duration of the train of pulses comprising a frame is preferably of the order of 10 msec.

As a person skilled in the art will readily understand, it not the least of the advantages of the invention that, in contrast to communication protocols using numeric addresses, the above described control detection system requires much smaller signal bandwidths and response speeds in the circuits, with attendant large reduction of costs.

A preferred embodiment of the invention has been described, but other embodiments are feasible according to the teachings given above. For instance, the connection to the bus, rather than by current-tapping pins, might be made by other means, such as incisions or clamping. Also, the distinction between neuter (narrow) pulses and marked (wide) pulses might be reversed.

Furthermore, the use of a trailer connector is clearly inherent to the particular embodiment shown. If the invention were applied to an entire vehicle, it is envisaged that a plurality of control/monitoring units are installed, which would be operated by buttons located mainly in the area of the vehicle dashboard.

## Claims

1. An system for distribution of electric power to a number of loads, particularly for motor vehicles,
wherein the system comprises:
(a) a four-lead electric bus (24) having two power leads (36, 38) connectable to a source of electric power and two signal leads (40, 42);
**characterized in that** the system further:
(b) a waveshape generator (46), connectable to said signal leads for periodically applying frames each comprising a sync pulse (S) having a first predetermined duration followed by a predetermined train of signal pulses having a second predetermined duration (C1, C2, C3, C4, ...), each pulse being associatable to a load;
(c) a control/monitoring unit associated with each load, and comprising a pulse marker (50) operable to change the duration of a predetermined pulse in said train (C1, C2, C3, C4) from said predetermined second duration to a third predetermined duration distinct from said first predetermined duration; and
(d) a connection unit associated with each load and comprising a switch device (56) from said power leads and said associated load (L), and a parser circuit (52) associated with said load and capable of determining the duration of a pulse in said train (C1, C2, C3, C4, ...), and to enable said switch device (56) if said pulse has said third predetermined duration.

2. The distribution system of claim 1, **characterized in that** said four-lead bus (24) comprises four leads (36, 38, 40, 42) enclosed in a flat insulating sheath (44).

3. The distribution system of claim 2, **characterized in that** each of said connection units is contained in a respective case having two pairs of needles (68) respectively leading to said switch device (56) and to said parser circuit (52), and **in that** said needles are arranged to pierce said sheath (44) and to penetrate said four respective leads (36, 38, 40, 42).

4. The distribution system of claim 3, **characterized in that** each case further contains a control/monitoring unit whose marker is driven by an impedance meter connected across the load to mark a predetermined pulse when the measured impedance does not fall within a predetermined range of values.

5. The distribution system of claim 1, **characterized in that** said first predetermined duration is longer than said second predetermined duration.

6. The distribution system of claim 5, **characterized in that** said third predetermined duration is longer than said second predetermined duration.

7. The distribution system of claim 6, **characterized in that** said third predetermined duration is about triple said second predetermined duration.

## Patentansprüche

1. System zum Verteilen von elektrischer Leistung an eine Anzahl von Lasten, insbesondere für Motorfahrzeuge, wobei das System umfaßt:
(a) einen elektrischen Vier-Leitungs-Bus (24) mit zwei Versorgungsleitungen (36, 38), die mit einer Quelle der elektrischen Leistung verbindbar sind, und zwei Signalleitungen (40, 42);
**dadurch gekennzeichnet, daß** das System weiterhin umfaßt:
(b) einen Wellenformgenerator (46), der mit den Signalleitungen für ein regelmäßiges Anwenden von Rahmen verbindbar ist, wobei jeder einen Sync-Puls (S) mit einer ersten vorherbestimmten Dauer gefolgt von einer vorherbestimmten Folge von Signalpulsen mit einer zweiten vorherbestimmten Dauer (C1, C2, C3, C4, ...) umfaßt, wobei jeder Puls einer Last zuordenbar ist;
(c) eine Steuer-/Überwachungseinheit, die jeder Last zugeordnet ist und einen Pulskennzeichner (50) umfaßt, der dazu eingerichtet ist, die Dauer eines vorherbestimmten Pulses in der Folge (C1, C2, C3, C4) von der vorherbestimmten zweiten Dauer auf eine dritte vorherbestimmte Dauer zu verändern, die sich von der ersten vorherbestimmten Dauer unterscheidet; und
(d) eine Verbindungseinheit, die jeder Last zugeordnet ist und eine Schaltvorrichtung (56) von den Versorgungsleitungen und der zugeordneten Last (L) sowie eine Zergliederungs-Schaltung (52) umfaßt, die der Last zugeordnet ist und in der Lage ist, die Dauer eines Pulses in der Folge (C1, C2, C3, C4, ...) zu bestimmen und um die Schaltvorrichtung (56) zu aktivieren, wenn der Puls die dritte vorherbestimmte Dauer aufweist.

2. Verteilungssystem nach Anspruch 1, **dadurch gekennzeichnet, daß** der Vier-Leitungs-Bus (24) vier Leitungen (36, 38, 40, 42) umfaßt, die von einer flachen isolierenden Hülle (44) umgeben sind.

3. Verteilungssystem nach Anspruch 2, **dadurch gekennzeichnet, daß** jede der Verbindungseinheiten in einem entsprechenden Gehäuse enthalten ist, das jeweils zwei Nadelpaare (68) aufweist, die zu der Schaltvorrichtung (56) und zu der Zergliederungs-Schaltung (52) führen, und daß die Nadein so angeordnet sind, daß sie die Hülle (44) durchstoßen und in die vier entsprechenden Leitungen (36, 38, 40, 42) eindringen.

4. Verteilungssystem nach Anspruch 3, **dadurch gekennzeichnet, daß** jedes Gehäuse weiterhin eine Steuer-/Überwachungseinheit enthält, deren Kennzeichner von einem Impedanzmeßgerät angetrieben ist, das über die Last verbunden ist, um einen vorherbestimmten Puls zu markieren, wenn die gemessene Impedanz nicht innerhalb eines vorherbestimmten Wertebereiches fällt.

5. Verteilungssystem nach Anspruch 1, **dadurch gekennzeichnet, daß** die erste vorherbestimmte Dauer länger als die zweite vorherbestimmte Dauer ist.

6. Verteilungssystem nach Anspruch 5, **dadurch gekennzeichnet, daß** die dritte vorherbestimmte Dauer länger als die zweite vorherbestimmte Dauer ist.

7. Verteilungssystem nach Anspruch 6, **dadurch gekennzeichnet, daß** die dritte vorherbestimmte Dauer ungefähr das Dreifache der zweiten vorherbestimmten Dauer beträgt.

## Revendications

1. Système de distribution d'énergie électrique à une pluralité de charges, particulièrement pour autovéhicules, comprenant:
(a) un bus électrique quadrifilaire (24) ayant deux fils de puissance (36, 38) capables d'être branchés à une source d'énergie électrique et deux fils de signaux (40, 42);
**caractérisé en ce que** le système comprend aussi:
(b) un générateur de formes d'onde (46), capable d'être couplé auxdits fils de signaux pour y appliquer périodiquement des séquences d'impulsions comprenant chacune une impulsion de synchronisation (S) ayant une première durée prédéterminée, suivie d'un train d'impulsions de signal ayant une deuxième durée prédéterminée (C1, C2, C3, C4, ...), chaque impulsion pouvant être associée à une charge;
(c) un groupe de contrôle/monitorage associé à chaque charge, et comprenant un marqueur d'impulsions (50) activable pour changer la durée d'une impulsion donnée dans ledit train (C1, C2, C3, C4, ...) de ladite deuxième durée prédéterminée à une troisième durée prédéterminée distincte de ladite première durée prédéterminée; et
(d) un groupe de branchement associé à chaque charge et comprenant un dispositif interrupteur (56) branché entre ledits fils de puissance et ladite charge associée (L), et un circuit de reconnaissance (52) associé à ladite charge et capable de déterminer la durée d'une impulsion dudit train (C1, C2, C3, C4, ...), et pour activer ledit dispositif interrupteur (56) si ladite impulsion présente ladite troisième durée prédéterminée.

2. Système de distribution selon la revendication 1, **caractérisé en ce que** ledit bus quadrifilaire (24) comprend quatre fils (36, 38, 40, 42) noyés dans une gaine isolante plate (44).

3. Système de distribution selon la revendication 2, **caractérisé en ce que** chacun desdits groupes de branchement est renfermé dans une boîte respective ayant deux paires d'aiguilles (68) branchés respectivement audit dispositif interrupteur (56) et audit circuit de reconnaissance (52), et **en ce que** lesdites aiguilles sont disposées pour perforer ladite gaine (44) et pour pénétrer dans ledits quatre fils respectifs (36, 38, 40, 42).

4. Système de distribution selon la revendication 3, **caractérisé en ce que** chaque boîte renferme aussi un desdits groupes de contrôle/monitorage dont le marqueur est piloté par un impédancemètre couplé en parallèle à la charge pour marquer une impulsion prédéterminée lorsque l'impédance mesurée ne rentre pas dans une gamme de valeurs prédéterminée.

5. Système de distribution selon la revendication 1, **caractérisé en ce que** ladite première durée prédéterminée est plus longue que ladite deuxième durée prédéterminée.

6. Système de distribution selon la revendication 5, **caractérisé en ce que** ladite troisième durée prédéterminée est plus longue que ladite deuxième durée prédéterminée.

7. Système de distribution selon la revendication 6, **caractérisé en ce que** ladite troisième durée prédéterminée est environ triple de ladite deuxième durée prédéterminée.
